# EUROPÄISCHE PATENTSCHRIFT

(11) **EP 1 855 934 B1**
(45) Veröffentlichungstag und Bekanntmachung des Hinweises auf die Patenterteilung: **01.10.2008**
(21) Anmeldenummer: 06707428.6
(22) Anmeldetag: 06.03.2006
(51) Int. Cl.: B62D 11/00

(54) **ANTRIEBSSYSTEM FÜR DEN EINZELANTRIEB DER BEIDEN ANTRIEBSRÄDER EINES ANTRIEBSRÄDERPAARES**
DRIVE SYSTEM FOR INDIVIDUALLY DRIVING TWO DRIVE WHEELS OF A DRIVE WHEEL PAIR
SYSTEME D'ENTRAINEMENT DESTINE A L'ENTRAINEMENT INDIVIDUEL DES DEUX ROUES MOTRICES D'UNE PAIRE DE ROUES MOTRICES

(30) Priorität: 08.03.2005 DE 102005010514
(43) Veröffentlichungstag der Anmeldung: 21.11.2007
(73) Patentinhaber: ZF FRIEDRICHSHAFEN Aktiengesellschaft, 88038 Friedrichshafen (DE)
(72) Erfinder: BACHMANN, Max, 88339 Bad Waldsee (DE)
(86) Internationale Anmeldenummer: PCT/EP2006/002007
(87) Internationale Veröffentlichungsnummer: WO 2006/094730

(56) Entgegenhaltungen:
- WO-A-02/40304
- DE-A1- 1 555 338
- DE-B3- 10 246 870
- DE-U- 6 910 335
- US-A- 5 445 234
- US-A- 6 105 704
- US-A1- 2004 121 871

## Beschreibung

Die Erfindung betrifft ein Antriebssystem für den Einzelantrieb der beiden Antriebsräder eines Antriebsräderpaares oder dergleichen für ein Fahrzeug gemäß dem Oberbegriff des Patentanspruchs 1.

Antriebssysteme der im Oberbegriff des Anspruches 1 genannten Art werden seit geraumer Zeit beispielsweise in Fahrzeugen mit Rutschlenkung eingebaut, also in Fahrzeuge, bei denen zur Kurvenfahrt jeweils die kurveninneren Antriebsräder (oder Kettensterne eines Kettenfahrzeuges) gegenüber den kurvenäußeren Antriebsrädern verlangsamt werden. Die stufenlos regelbaren Antriebsmaschinen erlauben dabei ein weitgehend beliebiges Drehzahlverhältnis zwischen kurveninnerem Antriebsrad und kurvenäußerem Antriebsrad. Es hat sich jedoch gezeigt, dass stufenlos regelbare Antriebsmaschinen dann, wenn diesen eine Getriebeanordnung mit einem festen Übersetzungsverhältnis nachgeordnet ist, an ihre Grenzen bezüglich der Endgeschwindigkeit und dem Antriebsdrehmoment stoßen. Ein weiterer Nachteil wird auch darin gesehen, dass es aus Platzgründen häufig schwierig ist, zwei aus in Flucht zueinander angeordneten und aus Antriebsmaschine, Getriebeanordnung und Rad bestehenden Antriebsgruppen in Richtung der Drehachse des Antriebsräderpaares nebeneinander einzubauen und zu einer Antriebsachsanordnung zu gestalten. Eine derartige Anordnung ist beispielsweise aus der US 6105704 bekannt.

Vor diesem Hintergrund liegt der Erfindung die Aufgabe zugrunde, ein Antriebssystem gemäß dem Oberbegriff des Anspruches 1 zu schaffen, welches es einerseits erlaubt, die Endgeschwindigkeit bzw. das Antriebsmoment zu variieren, und welches andererseits einen erleichterten Einbau in ein Fahrzeug ermöglicht.

Die Lösung dieser Aufgabe ergibt sich aus den Merkmalen des Hauptanspruches, während vorteilhafte Ausgestaltungen und Weiterbildungen der Erfindung den Unteransprüchen zu entnehmen sind.

Der Erfindung liegt die Erkenntnis zugrunde, dass sich eine Lösung dieser Aufgabe mit verhältnismäßig einfachen konstruktiven Mitteln dadurch verwirklichen lässt, dass man die beiden oben genannten, der Erfindung zugrundeliegenden Teilaufgaben auf zwei Getriebeeinheiten verteilt, deren eine demnach für eine Änderung des Übersetzungsverhältnisses und deren andere für eine Verbesserung der Einbauverhältnisse ausgelegt ist.

Demnach geht die Erfindung aus von einem Antriebssystem für den Einzelantrieb der beiden Antriebsräder eines Antriebsräderpaares oder dergleichen für ein Fahrzeug, umfassend zwei stufenlos regelbare Antriebsmaschinen, welche jeweils über eine Getriebeanordnung mit einem zugeordneten Antriebsrad antriebsverbunden sind.

Zur Lösung der gestellten Aufgabe ist ausgehend von einem derartigen Antriebssystem vorgesehen, dass die Getriebeanordnung jeweils zwei hintereinander angeordnete Getriebeeinheiten umfasst, wobei eine der Getriebeeinheiten ein schaltbares Getriebe und die andere Getriebeeinheit ein Kegelradgetriebe mit einer festen Übersetzung ist.

Mit Hilfe eines beispielsweise zweistufig schaltbaren Getriebes lassen sich zwei Drehzahl- bzw. Antriebsmomentbereiche vorwählen, während das Kegelradgetriebe die Möglichkeit eröffnet, die Antriebsmaschine und gegebenenfalls eine der beiden Getriebeeinheiten rechtwinklig zur Drehachse der Antriebsräder anzuordnen, welches die Einbaumöglichkeiten erheblich verbessert, wie anhand von Ausführungsbeispielen dargelegt werden wird.

In einer bevorzugten Ausgestaltung der Erfindung ist vorgesehen, dass das schaltbare Getriebe ein zweistufiges Kegelradgetriebe ist, dessen Sonnenrad mit einer Antriebswelle verbunden ist, dessen Planetenradträger mit einer Abtriebswelle verbunden ist, und dessen Hohlrad wahlweise drehfest arretierbar oder mit der Abtriebswelle koppelbar ist.

Kegelradgetriebe erlauben verhältnismäßig große Übersetzungen bei kompakter Bauweise. Eine Schaltung mittels des wahlweise arretierbaren oder mit der Abtriebswelle beziehungsweise mit dem damit fest verbundenen Planetenradträger koppelbaren Hohlrades ermöglicht wiederum bei geringem Bauaufwand einen großen Übersetzungssprung.

Je nach den vorhandenen Einbauverhältnissen kann vorgesehen sein, dass das schaltbare Getriebe der Antriebsmaschine nachgeordnet und das Kegelradgetriebe dem schaltbaren Getriebe nachgeordnet ist, oder dass umgekehrt das Kegelradgetriebe der Antriebsmaschine nachgeordnet und das schaltbare Getriebe dem Kegelradgetriebe nachgeordnet ist.

Eine bevorzugte Ausführungsform der Erfindung sieht vor, dass die Antriebswellen der Antriebsmaschinen jeweils rechtwinklig zu der Drehachse des Antriebsräderpaares angeordnet sind, und dass das Kegelradgetriebe einen Umlenkwinkel von 90° aufweist. Auf diese Weise lassen sich die Antriebsmaschinen beispielsweise in der Längsachse des Fahrzeuges vor und hinter der Drehachse des Antriebsräderpaares anordnen, so dass die diesen nachgeschalteten Getriebeanordnungen nahe der Längsachse des Fahrzeuges platziert und über verhältnismäßig lange Gelenkwellen mit einzeln federn aufgehängten Antriebsrädern verbunden werden können.

Gemäß einer weiteren Ausgestaltung der Erfindung ist der aus zwei Getriebeeinheiten bestehenden Getriebeanordnung jeweils ein weiteres, nicht schaltbares Summiergetriebe mit einem ersten Übertragungsglied und einem zweiten Übertragungsglied zum Einleiten von zu überlagernden, auf ein Ausgangsglied wirkenden Antriebsmomenten nachgeordnet, wobei die beiden ersten Übertragungsglieder der beiden Summiereinheiten jeweils über einen von der ersten Antriebsmaschine angetriebenen ersten Getriebezug und die zweiten Übertragungsglieder jeweils über einen von der zweiten Antriebsmaschine angetriebenen zweiten Getriebezug miteinander gekoppelt sind, und wobei die Übersetzungsverhältnisse der Getriebezüge zu den Übertragungsgliedern gegensinnig ungleich sind.

Eine derartige Anordnung erlaubt es, eine beispielsweise an einem verlangsamten, kurveninneren Antriebsrad eines Antriebsräderpaares nicht abgerufene Antriebsleistung zu dem jeweils kurvenäußeren Antriebsrad zu transferieren, wie anhand eines Ausführungsbeispieles im einzelnen erläutert wird. Unter dem Begriff "gegensinnig ungleich" wird dabei eine Anordnung verstanden, bei welcher die ungleichen Übersetzungsverhältnisse der Getriebezüge zu den Übertragungsgliedern der ersten bzw. zweiten Summiereinheit entgegengesetzt und so gewählt sind, dass sie sich ausgleichen, so dass bei gleichen Drehzahlen der beiden Antriebsmaschinen auch die zugeordneten Antriebsräder gleiche Drehzahlen haben.

Die Antriebsmaschinen sind vorzugsweise Elektromotoren, deren Drehzahl in einfacher Weise regelbar ist.

Das erfindungsgemäße Antriebssystem wird vorzugsweise bei Fahrzeugen eingesetzt, bei denen die Antriebsräder einzeln federnd aufgehängt sind, wobei diese über Gelenkwellen an die zugeordneten Antriebsmaschinen beziehungsweise die diesen nachgeordneten Getriebeeinheiten angeschlossen sind.

Mehrere Ausführungsbeispiele der Erfindung sind in der Zeichnung dargestellt und im folgenden näher beschrieben. Es zeigen:
- Fig. 1: ein Antriebssystem, bei welchem jeder Antriebsmaschine jeweils ein schaltbares Getriebe und dieser ein Kegelradgetriebe nachgeordnet ist;
- Fig. 2: ein Antriebssystem, bei welchem jeder Antriebsmaschine jeweils ein Kegelradgetriebe und diesem ein schaltbares Getriebe nachgeordnet ist; und
- Fig. 3: eine Anordnung etwa gemäß der Fig. 1, wobei jedoch dem Kegelradgetriebe jeweils eine Summiereinheit nachgeordnet ist.

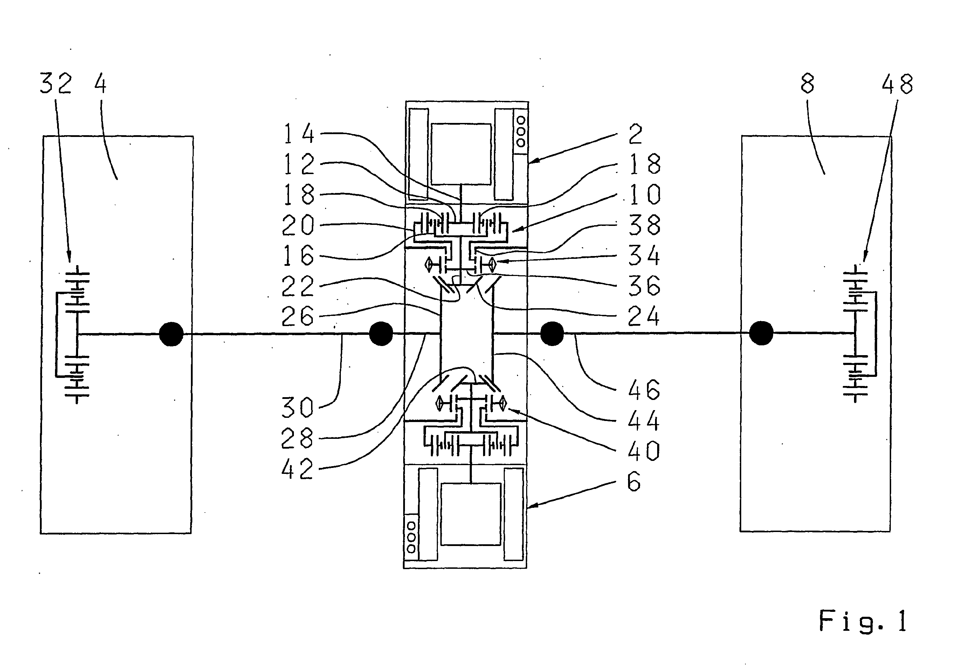

Das in Fig. 1 dargestellte Antriebssystem umfasst eine erste Antriebsmaschine 2, welche einem ersten Antriebsrad 4 zugeordnet ist, sowie eine zweite Antriebsmaschine 6, welche einem zweiten Antriebsrad 8 zugeordnet ist.

Der ersten Antriebsmaschine 2 ist ein zweistufig schaltbares Getriebe 10 nachgeordnet, welches als Planetenradgetriebe ausgebildet ist. Das Sonnenrad 12 des Getriebes 10 ist mit einer Antriebswelle 14 der Antriebsmaschine 2 verbunden, und es steht in Eingriff mit mehreren am Planetenradträger 16 angeordneten Planetenrädern 18, die andererseits mit der Innenverzahnung eines Hohlrades 20 im Eingriff sind.

Der Planetenradträger 16 ist mit einer Abtriebswelle 22 verbunden, die an ihrem freien Ende ein Kegelrad 24 trägt, welches mit einem Kegelrad 26 im Eingriff ist. Dieses Kegelrad 26 ist mit einer Ausgangswelle 28 verbunden, die über eine Gelenkwelle 30 mit dem ersten Antriebsrad 4 in Antriebsverbindung steht.

Die Gelenkwelle 30 ermöglicht eine federnde Aufhängung des Antriebsrades 4, wie allgemein bekannt und deshalb nicht näher erläutert ist. Das Antriebsrad 4 wird von der Gelenkwelle 30 über zudem ein weiteres Planetenradgetriebe 32 angetrieben, wie ebenfalls an sich bekannt und deshalb hier nicht nochmals erläutert ist.

Das Getriebe 10 ist als zweistufig schaltbares Getriebe ausgebildet. Zu diesem Zweck kann das Hohlrad 20 über ein Schaltritzel 34 wahlweise mit einem fest auf der Abtriebswelle 22 angeordneten Schaltzahnrad 36 gekoppelt werden, wie in Fig. 1 dargestellt ist, oder mit einer fest im Getriebegehäuse angeordneten Arretierverzahnung 38. Bei der in Fig. 1 dargestellten Schaltstellung sind der Planetenradträger 16 und das Hohlrad 20 fest miteinander drehgekoppelt. Es findet keine Abwälzung der Planetenräder 18 gegenüber dem Hohlrad 20 und damit auch gegenüber dem Sonnenrad 12 statt, so dass sich die Abtriebswelle 22 mit der Drehzahl der Antriebswelle 14 dreht.

Wenn das Hohlrad 20 über das Schaltritzel 34 mit der Arretierverzahnung 38 gekoppelt wird, dann ist das Hohlrad 20 beispielsweise gehäusefest arretiert und die Planetenräder 18 wälzen sich auf der Innenverzahnung des Hohlrades 20 ab, so dass die Drehzahl der Antriebswelle 14 in bekannter Weise in eine davon verschiedene Drehzahl der Abtriebswelle.22 übersetzt wird.

Das dem zweiten Antriebsrad 8 zugeordnete Antriebssystem ist gleich ausgebaut wie das oben beschriebene Antriebssystem. Es umfasst ein der zweiten Antriebsmaschine 6 nachgeordnetes, zweistufig schaltbares, als Planetenradgetriebe ausgebildetes Getriebe 40, ein aus den Kegelrädern 42 und 44 gebildetes Kegelradgetriebe, eine Gelenkwelle 46 und ein weiteres, dem zweiten Antriebsrad 8 zugeordnetes Planetenradgetriebe 48.

Die beiden Antriebsräder 4 bzw. 8 werden jeweils unabhängig voneinander von den zugeordneten Antriebsmaschinen 2 bzw. 6 angetrieben. Ein Leistungstransfer von einer Seite zur anderen findet nicht statt.

Über die schaltbaren Getriebe 10, 40 erfolgt demnach eine Drehzahlbeziehungsweise Antriebsdrehmomentreglung des Fahrzeuges.

Um eine Kurvenfahrt einzuleiten, wird eines der beiden Antriebsräder 4 und/oder 8 durch eine entsprechende Drehzahlregelung der zugeordneten Antriebsmaschine 2, 6 in ihrer Drehzahl verlangsamt oder beschleunigt, so dass das Fahrzeug infolge unterschiedlicher Geschwindigkeiten der Antriebsräder eine Kurve fährt.

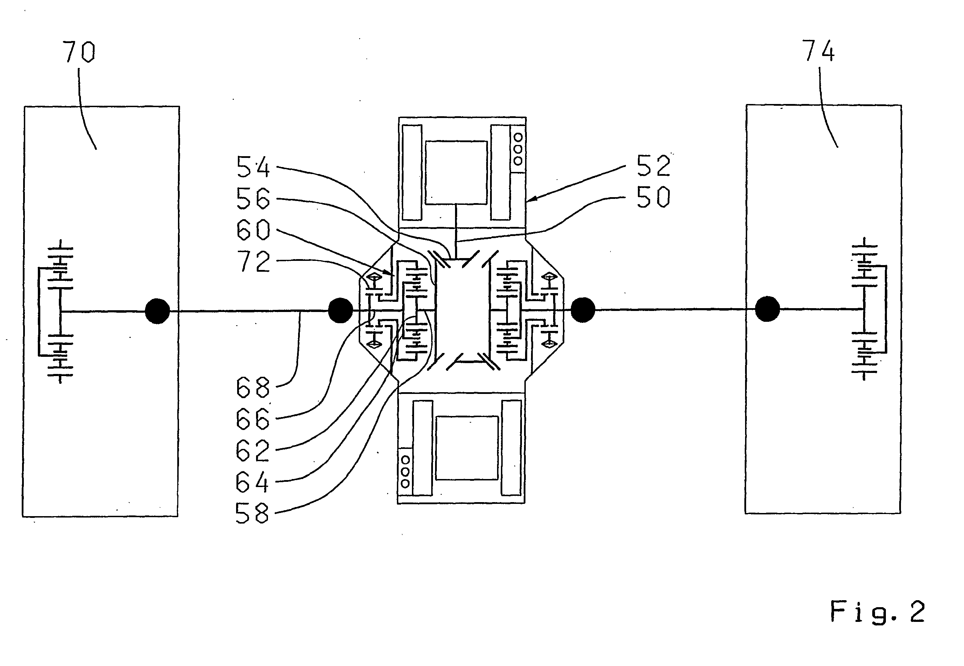

Fig. 2 zeigt eine Anordnung ähnlich der Fig. 1, wobei jedoch im Unterschied dazu jeweils das Kegelradgetriebe direkt der Antriebsmaschine nachgeordnet und das schaltbare Getriebe dem Kegelradgetriebe nachgeordnet ist. Das Antriebssystem gemäß der Fig. 2 wird am Beispiel des Antriebes für das Antriebsrad 70 erläutert. Die Antriebswelle 50 einer Antriebsmaschine 52 trägt ein Kegelrad 54, welches mit einem Kegelrad 56 im Eingriff ist. Das Kegelrad 56 ist mit der Eingangswelle 58 eines schaltbaren Getriebes (Planetenradgetriebe) 60 verbunden, welche das Sonnenrad 62 antreibt. Die mit dem Planetenradträger 64 verbundene Antriebswelle 66 treibt über eine Gelenkwelle 68 ein Antriebsrad 70 an, dem auch hier ein weiteres Planetenradgetriebe zugeordnet ist.

Das Getriebe 60 ist wie im Beispiel gemäß der Fig. 1 durch Schalten eines Schaltritzels 72 zwischen zwei Schaltstufen schaltbar.

Das dem anderen Antriebsrad 74 zugeordnete Antriebssystem ist gleich aufgebaut, so dass es nicht nochmals beschrieben werden muss.

Wie im Beispiel der Fig. 1 besteht auch bei diesem Antriebssystem keine Leistungstransferverbindung zwischen den Antrieben der beiden Antriebsräder 70 bzw. 74.

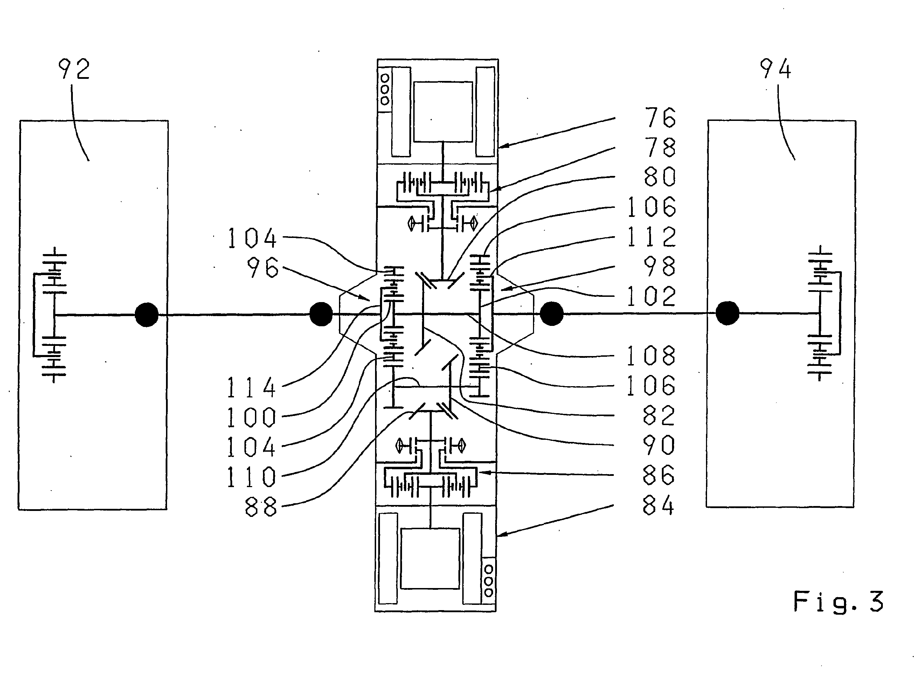

Fig. 3 zeigt ein Antriebssystem, bei welchem wiederum der ersten Antriebsmaschine 76 ein zweistufig schaltbares, als Planetenradgetriebe ausgebildetes Getriebe 78 und diesem ein aus zwei Kegelrädern 80 und 82 gebildetes Kegelradgetriebe nachgeordnet ist. In ähnlicher Weise ist der zweiten Antriebsmaschine 84 ein zweistufig schaltbares Getriebe 86 und diesem ein aus einem Kegelrad 88 und einem Kegelrad 90 gebildetes Kegelradgetriebe nachgeordnet.

Die beiden Kegelräder 82 bzw. 90 dienen hier nicht direkt dem Antrieb von zugeordneten Antriebsrädern 92 bzw. 94 wie im Ausführungsbeispiel gemäß der Fig. 1, sondern sie sind mit diesen Antriebsrädern 92 bzw. 94 zugeordneten Summiereinheiten 96 bzw. 98 gekoppelt, wie im folgenden näher erläutert wird.

Die Summiereinheiten 96 und 98 sind jeweils als Planetenradgetriebe ausgebildet, deren Sonnenräder 100 bzw. 102 jeweils ein erstes Übertragungsglied und deren Hohlräder 104 bzw. 106 jeweils ein zweites Übertragungsglied bilden, über die zu überlagernde Antriebsmomente in die Summiereinheiten 96 bzw. 98 eingeleitet werden können.

Das Kegelrad 82 ist dabei mit einer Verbindungswelle 108 fest verbunden, welche die Sonnenräder 100 bzw. 102 antreibt. Das Kegelrad 90 ist mit einer Verbindungswelle 110 verbunden, welche die Hohlräder 104 bzw. 106 über eine daran ausgebildete Außenverzahnung antreibt.

Die Übersetzungsverhältnisse der Verbindungswelle 108 zu den Summiereinheiten 96 und 98 sind verschieden, so dass die diesbezüglichen Eingangsdrehzahlen der Summiereinheiten 96 bzw. 98 unterschiedlich sind.

Die Übersetzungsverhältnisse von der Verbindungswelle 110 zu den Summiereinheiten 96 bzw. 98 sind ebenfalls verschieden und zu den Übersetzungsverhältnissen der Verbindungswelle 108 entgegengesetzt derart, dass bei gleichen Drehzahlen der Antriebsmaschinen 76 bzw. 84 die Antriebsräder 92 bzw. 94 gleich schnell angetrieben werden.

Wenn beispielsweise die Antriebsmaschine 76 verlangsamt wird, um eine Kurvenfahrt einzuleiten, dann verlangsamt sich bei den dargestellten Übersetzungsverhältnissen die über die Verbindungswelle 108 eingeleitete Drehzahl des Planetenradträgers 112 der Summiereinheit 98 stärker als die Drehzahl des Planetenradträgers 114 der Summiereinheit 96, so dass sich auch das Antriebsrad 94 langsamer dreht als das Antriebsrad 92.

Das beim Antriebsrad 94 nicht abgerufene Antriebsmoment wird über die Verbindungswelle 110 auf das Antriebsrad 92 übertragen, so dass keine Antriebsleistung verloren geht.

### Bezugszeichen

- 2 -: erste Antriebsmaschine
- 4: Antriebsrad
- 6: zweite Antriebsmaschine
- 8: zweites Antriebsrad
- 10: schaltbares Getriebe
- 12: Sonnenrad
- 14: Antriebswelle
- 16: Planetenradträger
- 18: Planetenräder
- 20: Hohlrad
- 22: Abtriebswelle
- 24: Kegelrad
- 26: Kegelrad
- 28: Ausgangswelle
- 30: Gelenkwelle
- 32: Planetenradgetriebe
- 34: Schaltritzel
- 36: Schaltzahnrad
- 38: Arretierverzahnung
- 40: schaltbares Getriebe
- 42: Kegelrad
- 44: Kegelrad
- 46: Gelenkwelle
- 48: Planetenradgetriebe
- 50: Antriebswelle
- 52: Antriebsmaschine
- 54: Kegelrad
- 56: Kegelrad
- 58: Eingangswelle
- 60: schaltbares Getriebe
- 62: Sonnenrad
- 64: Planetenradträger
- 66: Antriebswelle
- 68: Gelenkwelle
- 70: Antriebsrad
- 72: Schaltritzel
- 74: Antriebsrad
- 76: erste Antriebsmaschine
- 78: schaltbares Getriebe
- 80: Kegelrad
- 82: Kegelrad
- 84: zweite Antriebsmaschine
- 86: schaltbares Getriebe
- 88: Kegelrad
- 90: Kegelrad
- 92: Antriebsrad
- 94: Antriebsrad
- 96: Summiereinheit
- 98: Summiereinheit
- 100: Sonnenrad
- 102: Sonnenrad
- 104: Hohlrad
- 106: Hohlrad
- 108: Verbindungswelle
- 110: Verbindungswelle
- 112: Planetenradträger
- 114: Planetenradträger

## Patentansprüche

1. Antriebssystem für den Einzelantrieb der beiden Antriebsräder eines Antriebsräderpaares oder dergleichen für ein Fahrzeug, umfassend zwei stufenlos regelbare Antriebsmaschinen (2, 6), welche jeweils über eine Getriebeanordnung mit einem zugeordneten Antriebsrad (4, 8) oder dergleichen antriebsverbunden sind, **dadurch gekennzeichnet, dass** die Getriebeanordnung jeweils zwei hintereinander angeordnete Getriebeeinheiten umfasst, wobei eine der Getriebeeinheiten als ein schaltbares Getriebe (10) und die andere Getriebeeinheit als ein Kegelradgetriebe (24, 26) mit einer festen Übersetzung ausgebildet ist.

2. Antriebssystem nach Anspruch 1, **dadurch gekennzeichnet, dass** das schaltbare Getriebe (10) ein zweistufiges Planetenradgetriebe ist, dessen Sonnenrad (12) mit einer Antriebswelle (14) verbunden ist, dessen Planetenradträger (16) mit einer Abtriebswelle (22) verbunden ist, und dessen Hohlrad (20) wahlweise drehfest arretierbar oder mit der Abtriebswelle (22) koppelbar ist.

3. Antriebssystem nach Anspruch 1 oder 2, **dadurch gekennzeichnet, dass** das schaltbare Getriebe (10) der Antriebsmaschine (2) nachgeordnet und das Kegelradgetriebe (24, 26) dem schaltbaren Getriebe (10) nachgeordnet ist.

4. Antriebssystem nach Anspruch 1 oder 2, **dadurch gekennzeichnet, dass** das Kegelradgetriebe (54, 56) der Antriebsmaschine (52) nachgeordnet und das schaltbare Getriebe (60) dem Kegelradgetriebe (54, 56) nachgeordnet ist.

5. Antriebssystem nach einem der Ansprüche 1 bis 4, **dadurch gekennzeichnet, dass** die Antriebswellen der Antriebsmaschinen (2, 6) rechtwinklig zu der Drehachse des Antriebsräderpaares (4, 8) angeordnet sind und dass das Kegelradgetriebe (24, 26; 42, 44) einen Umlenkwinkel von 90° aufweist.

6. Antriebssystem nach einem der Ansprüche 1 bis 5, **dadurch gekennzeichnet, dass** der Getriebeanordnung jeweils eine Summiereinheit (96, 98) mit einem ersten Übertragungsglied (Sonnenräder 100,102) und einem zweiten Übertragungsglied (Hohlräder 104,106) zum Einleiten von zu überlagernden, auf ein Ausgangsglied (114, 112) wirkenden Antriebsmomenten nachgeordnet ist, wobei die beiden ersten Übertragungsglieder der beiden Summiereinheiten (96, 98) jeweils über einen von der ersten Antriebsmaschine (76) angetriebenen ersten Getriebezug (Verbindungswelle 108) und die zweiten Übertragungsglieder jeweils über einen von der zweiten Antriebsmaschine (84) angetriebenen zweiten Getriebezug (Verbindungswelle 110) miteinander gekoppelt sind, und wobei die Übersetzungsverhältnisse der Getriebezüge zu den Übertragungsgliedern gegensinnig ungleich sind.

7. Antriebssystem nach einem der Ansprüche 1 bis 6, **dadurch gekennzeichnet, dass** die Antriebsmaschinen (2, 6) Elektromotoren sind.

8. Antriebssystem nach einem der Ansprüche 1 bis 7, **dadurch gekennzeichnet, dass** die Antriebsräder (4, 8) einzeln federnd aufgehängt sind, und dass diese über Gelenkwellen (30, 46) an die zugeordneten Antriebsmaschinen (2, 6) bzw. die diesen nachgeordneten Getriebeanordnungen angeschlossen sind.

## Claims

1. Drive system for the individual drive of each drive wheel of a pair of drive wheels or something like that for a vehicle, comprising two continuously variable driving motors (2, 6), each of which is drivingly connected via a transmission arrangement with an assigned drive wheel (4, 8), or something like that, **characterized in that** each transmission arrangement comprises two transmission units arranged one behind the other, with one of the transmission units being designed as a shiftable transmission (10) and the other transmission unit as a bevel gear (24, 26) with a fixed ratio.

2. Drive system according to claim 1, **characterized in that** the shiftable transmission (10) is a two-stage planetary transmission whose center gear (12) is linked to a drive shaft (14), whose planet-gear carrier (16) is linked to an output shaft (22), and whose ring gear (20) is optionally nonrotationally arrestable or can be coupled with the output shaft (22).

3. Drive system according to claim 1 or 2, **characterized in that** the shiftable transmission (10) is secondary to the driving motor (2) and the bevel gear (24, 26) is secondary to the shiftable transmission (10).

4. Drive system according to claim 1 or 2, **characterized in that** the bevel gear (54, 56) is secondary to the driving motor (2) and the shiftable transmission (60) is secondary to the bevel gear (54, 56).

5. Drive system according to one of the claims 1 thru 4, **characterized in that** the drive shafts of the driving motors (2, 6) are arranged perpendicular to the axis of rotation of the pair of drive wheels (4, 8) and that the bevel gear (24, 26, 42, 44) features a deflection angle of 90°.

6. Drive system according to one of the claims 1 thru 5, **characterized in that** each transmission arrangement has a secondary summing unit (96, 98) with a first transmission component (center gears 100, 102) and a second transmission component (ring gears 104, 106) for the introduction of superposed drive torques acting on an output component (114, 112), with each of the two first transmission components of the two summing units (96, 98) being linked to each other via a first gear train (spacer shaft 108) driven by the first driving motor (76) and each of the second transmission components being linked to each other via a second gear train (spacer shaft 110) driven by the second driving motor (84), and with the correlation of the transmission ratios of the gear trains with those of the transmission components being negative.

7. Drive system according to one of the claims 1 thru 6, **characterized in that** the driving motors (2, 6) are electric motors.

8. Drive system according to one of the claims 1 thru 7, **characterized in that** the drive wheels (4, 8) are independently suspended and that they are linked to the assigned driving motors (2, 6) or their secondary transmission arrangements via drive shafts (30, 46).

## Revendications

1. Système d'entraînement destiné à l'entraînement individuel des deux roues motrices d'une paire de roues motrices ou similaire d'un véhicule, comprenant deux moteurs d'entraînement (2, 6) à réglage continu, reliés chacun à une roue motrice (4, 8) correspondante ou similaire à des fins d'entraînement par l'intermédiaire d'un système de transmission, **caractérisé en ce que** le système de transmission comprend respectivement deux unités de transmission disposées l'une après l'autre, sachant que une des unités de transmission est réalisée comme transmission couplable (10) et l'autre unité de transmission est réalisée comme transmission à engrenages coniques (24, 26) à rapport fixe.

2. Système d'entraînement selon la revendication 1, **caractérisé en ce que** la transmission couplable (10) est une boîte planétaire à deux étages, dont le planétaire (12) est lié à un arbre d'entrée (14), dont l'arbre porte-satellites (16) est lié à un arbre de sortie (22), et dont la couronne (20) peut être, au choix, fixé solidaire en rotation ou couplé à un arbre de sortie (22).

3. Système d'entraînement selon la revendication 1 ou 2, **caractérisé en ce que** la transmission couplable (10) est montée en aval du moteur d'entraînement (2) et **en ce que** la transmission à engrenages coniques (24, 26) est montée en aval de la transmission couplable (10).

4. Système d'entraînement selon la revendication 1 ou 2, **caractérisé en ce que** la transmission à engrenages coniques (54, 56) est montée en aval du moteur d'entraînement (52) et **en ce que** la transmission couplable (60) est montée en aval de la transmission à engrenages coniques (54, 56).

5. Système d'entraînement selon une des revendications 1 à 4, **caractérisé en ce que** les arbres d'entrée des moteurs d'entraînement (2, 6) sont disposés perpendiculairement par rapport à l'axe de rotation du paire de roues motrices (4, 8) et **en ce que** la transmission à engrenages coniques (24, 26, 42, 44) comporte un angle de déviation de 90°.

6. Système d'entraînement selon une des revendications 1 à 5, **caractérisé en ce que** en aval du systéme de transmission est montée respectivement une unité de sommation (96, 98) avec un premier élément de transmission (planétaires 100, 102) et un deuxième élément de transmission (couronnes 104, 106) destinés à l'application de couples d'entrée à superposer et agissant sur un élément de sortie (114, 112), sachant que les premiers deux éléments de transmission des deux unités de sommation (96, 98) sont couplés respectivement par un premier train d'engrenages (arbre de liaison 108) entraîné par le premier moteur d'entraînement (76) et que les deuxièmes éléments de transmission sont couplés l'un à l'autre respectivement par un deuxième train d'engrenages (arbre de liaison 110) entraîné par le deuxième moteur d'entraînement (84), et sachant que les rapports de démultiplication des trains d'engrenages par rapport aux éléments de transmission sont inversement inégaux.

7. Système d'entraînement selon une des revendications 1 à 6, **caractérisé en ce que** les moteurs d'entraînement (2, 6) sont des moteurs électriques.

8. Système d'entraînement selon une des revendications 1 à 7, **caractérisé en ce que** les roues motrices (4, 8) sont suspendues individuellement et **en ce que** celles-ci sont liées par l'intermédiaire d'arbres à cardan (30, 46) aux moteurs d'entraînement associés (2, 6) ou aux systèmes de transmission montés en aval de ceux-ci.
